Europäisches Patentamt

European Patent Office

Office européen des brevets

(19)

(11) Numéro de publication: **0 138 724**
**A2**

## (12) DEMANDE DE BREVET EUROPEEN

(21) Numéro de dépôt: **84420163.2**

(22) Date de dépôt: **28.09.84**

(51) Int. Cl.⁴: **A 47 C 31/02**

---

(30) Priorité: **11.10.83 FR 8316496**
**14.05.84 FR 8407691**

(43) Date de publication de la demande: **24.04.85**
**Bulletin 85/17**

(84) Etats contractants désignés: **AT BE CH DE GB IT LI NL SE**

(71) Demandeur: **V. LOUISON et CIE, société anonyme, Route Nationale 82, F-42480 La Fouillouse (FR)**

(72) Inventeur: **Louison, Guy, Route Nationale 82, F-42480 La Fouillouse (FR)**

(74) Mandataire: **Dupuis, François, Cabinet Charras 3 Place de l'Hôtel-de-Ville, F-42000 St.Etienne (FR)**

---

(54) **Elément auto-agrippant surmoulabe pour la réalisation de corps ou carcasses moulés ou injectés en matière souple, ou rigide, notamment pour les sièges de véhicules automobiles, et les corps ou carcasses mettant en oeuvre l'élément.**

(57) L'élément comprend un support plat (1) souple, rigide ou semi-rigide, qui présente sur une de ses faces (1a) une multiplicité de tiges ou pointes saillantes (1b) terminées chacune par une tête champignon ou renflement d'accrochage, lesdites têtes d'accrochage étant destinées à coopérer avec une contrepartie qui présente une multiplicité de boucles, en réalisant ainsi un accrochage ou assemblage séparable.

Pour équiper les sièges, directement lors de leur fabrication, d'éléments auto-agrippants, chacun desdits éléments est exécuté et dimensionné de façon à présenter, du côté de la face (1a) avec la multiplicité des tiges d'accrochage (1b), de part et d'autre ou tout autour desdites tiges, des parties autoadhésives (1c) destinées à maintenir l'élément dans le moule du corps ou carcasse pendant la coulée ou l'injection de la matière en protégeant les tiges d'accrochage de la matière moulée ou injectée, ledit élément demeurant solidaire du corps ou carcasse.

EP 0 138 724 A2

0138724

- 1 -

Elément auto-agrippant surmoulable pour la réalisation de corps ou carcasses moulés ou injectés en matière souple ou rigide, notamment pour les sièges de véhicules automobiles, et les corps ou carcasses mettant en oeuvre l'élément.

L'invention se rattache notamment au secteur technique des garnitures pour sièges.

On sait que de nombreux sièges sont exécutés à partir d'un corps ou bloc profilé, de dimensions variables, constituant l'assise et le dossier dudit siège. Le plus souvent, ces blocs sont réalisés en matière souple notamment en mousse de polyuréthane ou autre matière injectée ou moulée.

Ces blocs, corps ou carcasses en mousse sont ensuite équipés d'une housse ou revêtement en tissu qui constitue la garniture du siège et qui est fixée au moyen des composants d'un système de fixation auto-agrippante. Généralement, l'une des parties de la fixation auto-agrippante, se présente sous la forme d'éléments, de rubans ou analogues présentant sur une face une multiplicité de tiges d'accrochage susceptibles de coopérer avec la contrepartie constituée par un tissu à boucles qui présente directement ou d'une manière rapportée la housse ou garniture du siège destinée à envelopper le corps ou carcasse en mousse.

Les différents éléments équipés des tiges d'accrochage sont préencollés pour être fixés manuellement et unitairement sur le bloc de mousse, constituant l'ossature de base des sièges, en vue de coopérer ultérieurement avec la contrepartie de la housse de tissu.

On conçoit aisément que ces opérations sont longues et fastidieuses, augmentant très sensiblement le coût de fabrication des sièges qui trouvent de nombreuses applications notamment dans le secteur de l'automobile sans pour cela exclure d'autres domaines d'applications tels que par exemple les fauteuils et canapés.

Le but recherché selon l'invention est d'améliorer cet-

0138724

- 2 -

te fabrication en réduisant le nombre d'opérations pour augmenter la cadence de production tout en augmentant la solidité. A cet effet, on a voulu équiper les blocs de mousse des éléments auto-agrippants directement lors de la fabrication desdits blocs, c'est-à-dire simultanément à l'opération de moulage. Il a fallu résoudre le problème de positionnement des éléments dans le fond du moule ainsi que celui de l'adhérence de la matière constitutive du bloc-siège sur la matière desdits éléments auto-agrippants et de l'étanchéité pour éviter que la mousse s'infiltre dans les éléments agrippants.

L'invention telle est qu'elle est caractérisée dans les revendications, résout le problème consistant à créer un élément auto-agrippant qui est exécuté et dimensionné de façon à présenter, du côté de la face avec la multiplicité des tiges d'accrochage, de part et d'autre ou tout autour des dites tiges, des parties auto-adhésives destinées à maintenir l'élément dans le moule du corps ou carcasse pendant la coulée ou l'injection de la matière, en protégeant les tiges d'assemblage de la matière moulée ou injectée, ledit élément demeurant solidaire du corps ou carcasse.

D'autre part, le support plat que présente normalement le support auto-agrippant, est équipé sur la face opposée à la face présentant les têtes d'accrochage, des aspérités ou points d'ancrage ou d'adhérence.

Précisément et compte tenu de l'importance d'une adhérence étroite et très résistante du support plat avec la matière moulée ou injectée, la totalité ou une partie de la face du support plat opposée à la face qui présente les têtes et tiges d'accrochage, est recouverte d'un tissu à structure lâche, ajourée, que l'on fixe contre ladite face, en constituant en quelque sorte une grille d'ancrage très robuste et résistant pour la matière moulée ou injectée. On atteint ainsi un degré de solidarisation qui répond aux plus hautes exigences.

Les avantages obtenus grâce à l'invention consistent

0138724

- 3 -

essentiellement en ce que le surmoulage de l'élément auto-agrippant réduit le nombre d'opérations en permettant une augmentation de la cadence de production. A souligner aussi l'amélioration de la solidité notamment de la tenue à l'arrachement du ruban qui est partiellement noyé dans la mouse des blocs, corps ou carcasses.

L'invention est exposée ci-après plus en détail à l'aide des dessins représentant seulement un mode d'exécution.

La figure 1 est une vue en perspective d'un bloc de mousse profilé pour former un siège et équipé des différents éléments de rubans constituant l'une des parties de la fixation auto-agrippante.

La figure 2 est une vue de dessus de l'élément selon l'invention.

La figure 3 est une vue de dessous correspondant à la figure 2.

La figure 4 est une vue en coupe transversale considérée selon la ligne 4-4 de la figure 2.

La figure 5 est une vue en coupe longitudinale considérée selon la ligne 5-5 de la figure 2.

La figure 6 est une vue de dessus de l'élément selon une forme de réalisation en variante.

La figure 7 est une vue de dessous selon la figure 6.

La figure 8 est une vue partielle en coupe montrant la mise en place des rubans dans le fond du moule.

La figure 9 montre, après démoulage, le bloc mousse équipé des éléments auto-agrippants pour recevoir une garniture extérieure de tissu.

La figure 10 montre par une vue en perspective une forme de réalisation de l'élément auto-agrippant.

La figure 11 montre par une vue en perspective une forme de réalisation d'un tissu à mailles, à structure lâche, ajourée, destiné à être fixé contre l'élément auto-agrippant.

La figure 12 montre par des coupes transversales sui-

- 4 -

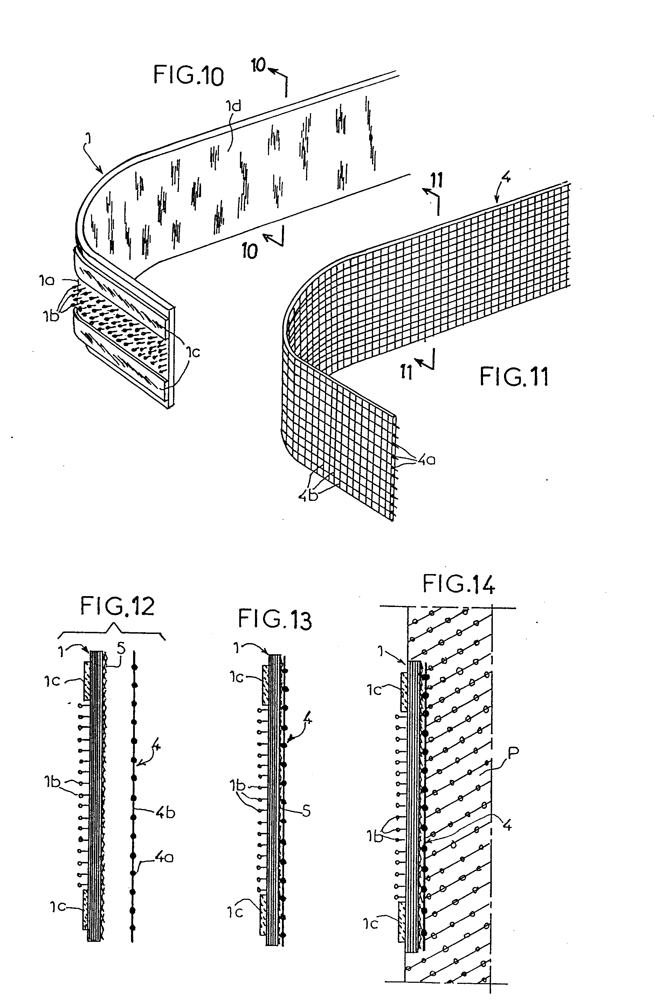

vant les lignes 10-10 et 11-11 des figures 10 et 11, avec des grossissements partiels, l'élément auto-agrippant et le tissu à mailles, avant leur assemblage.

La figure 13 montre les mêmes éléments et le tissu, après leur assemblage par collage, en réalisant, par combinaison, un nouvel élément.

La figure 14 illustre l'élément selon la figure 13 fortement solidaire d'un bloc, corps ou carcasse en matériau moulé ou injecté pour constituer par exemple un siège.

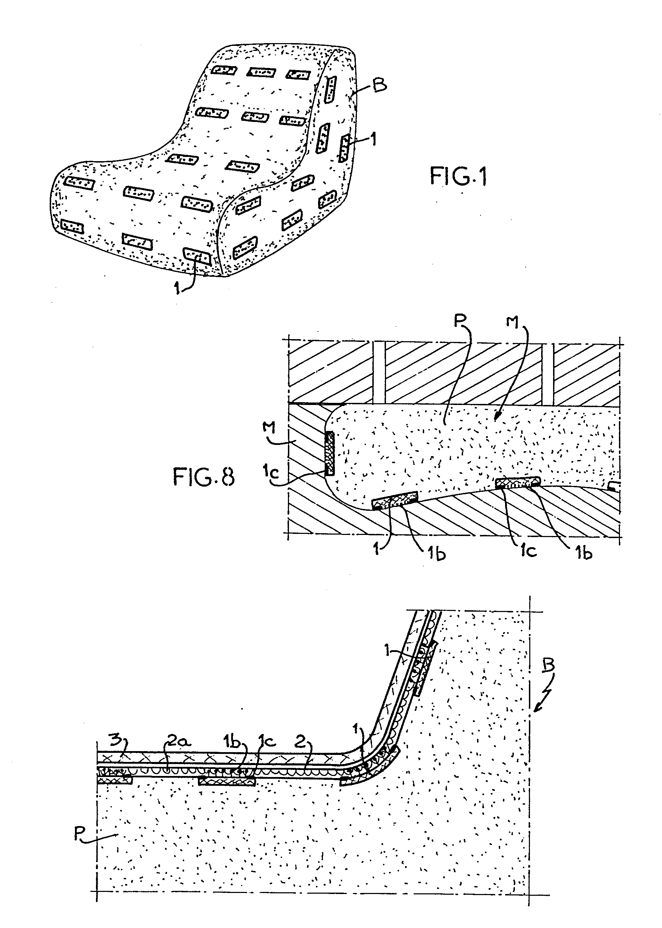

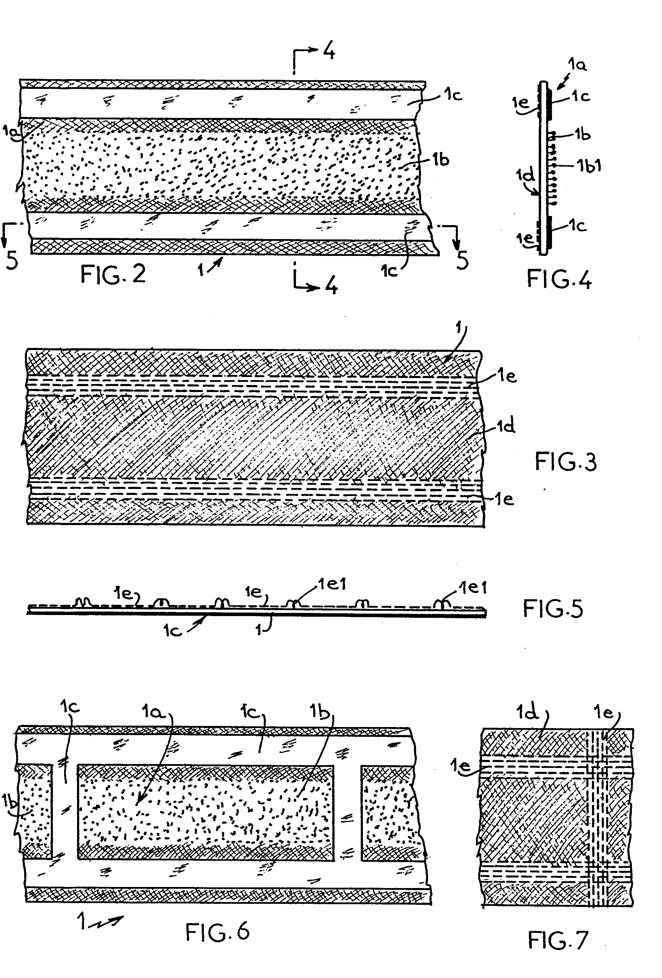

On voit à la figure 1, un bloc de mousse désigné dans son ensemble par (B) conformé pour constituer un siège, ledit bloc étant équipé des éléments d'une fixation auto-agrippante sous forme de rubans ou analogues. Comme le montre la figure 2, l'élément comprend un support plat (1) souple, rigide ou semi-rigide qui présente d'une manière connue, sur l'une de ses faces (1a), une multiplicité de tiges ou pointes saillantes (1b), terminées chacune par une tête champignon ou renflement d'accrochage (1b1).

Des parties continues ou discontinues, en matière auto-adhésive (1c) sont formées à des endroits convenablement déterminés de part et d'autre ou tout autour des tiges d'accrochage (1b). La face (1a) de l'élément ainsi exécutée, est destinée à être positionnée dans le fond du moule (M) dans lequel est injectée la mousse de polyuréthane ou autre matière (figure 8).

D'une manière préférée, le support plat (1) est en matière textile avec une structure tissée de sorte que la face (1d), opposée à la face (1a) présentant les têtes d'accrochage (1b) et les parties auto-adhésives (1c), présente une pluralité de micro-aspérités favorisant une étroite adhérence avec la matière moulée ou injectée. L'élément (1) se présente sous la forme d'un ruban.

Les parties auto-adhésives (1) peuvent par exemple être disposées longitudinalement, sous forme de bandes apparaissant de part et d'autre de la partie présentant les boucles d'accrochage (1b) (figure 2). Ou bien, ces bandes auto-adhésives (1c)

peuvent être disposées transversalement, en combinaison ou non avec d'autres bandes adhésives longitudinales (figure 6) de façon à entourer les parties équipées des têtes d'accrochage (1b).

L'une des fonctions des bandes auto-adhésives (1c), longitudinales et/ou transversales, est d'assurer le positionnement, d'une manière fixe, de l'élément ou ruban dans le fond du moule (M) ; une autre fonction réside dans le fait que les dites bandes (1c) assurent une étanchéité eu égard aux boucles d'ancrage (1b) de sorte que la mousse injectée n'attaque pas lesdites boucles (1b). Ces bandes auto-adhésives (1c) font office, en totalité ou en partie, de joints d'étanchéité entre la mousse injectée et les parties auto-agrippantes (1b).

Comme indiqué en préambule, il est nécessaire que la mousse adhère suffisamment sur le support textile du ruban (1), plus particulièrement sur la face (1d).

A cet effet, la face (1d) peut présenter des aspérités ou points d'ancrage ou d'adhérence. Dans le cas d'une structure tissée du support (1), la face (1d) présente, en totalité ou en partie, des fils pelucheux, fibreux (1e) pour améliorer la prise de la mousse sur le support textile. Ces fils (1e) formant une multiplicité de saillies, sont tissés en même temps que le ruban, soit en chaîne (figure 3), soit en trame, soit en chaîne et en trame (figure 7).

Par exemple, comme le montre la figure 3, les fils (1e) sont tissés le long des lisières des rubans (1).

On prévoit également, comme le montre la figure 5, de former lors du tissage des fils pelucheux (1e), des boucles ouvertes en saillie (1e1) disposées à intervalles réguliers ou non.

Il est bien évident que les fils (1e) peuvent aussi apparaître en chaîne et/ou en trame, sur la totalité de la face (1d) du ruban.

Ainsi exécuté, le ruban (1) est susceptible d'être incorporé au bloc (B) directement lors de son moulage.

- 6 -

Comme l'illustre la figure 8, plusieurs éléments ou morceaux de ruban (1) sont fixés dans le fond du moule (M) au moyen des bandes adhésives (1c), en étant convenablement positionnés et répartis dans le fond dudit moule. Il suffit alors d'injecter la mousse (P) qui adhère sur le support textile des morceaux de ruban, notamment en combinaison avec les fils pelucheux (1e). Toutefois, la mousse ne se répand pas sur les parties des boucles d'accrochage (1b) en étant arrêtée par les bandes adhésives (1c). L'efficacité du système n'est donc pas altérée.

Après démoulage, les morceaux de ruban (1) sont fermement et solidement incorporés au bloc de mousse (M), les parties d'accrochage (1b) étant prêtes à recevoir la contrepartie de la fixation auto-agrippante.

D'une manière connue, cette contre-partie est réalisée au moyen d'un tissu (2) que présente directement, ou d'une manière rapportée, la garniture-housse (3) destinée à recouvrir le bloc de mousse. Ce tissu (2) présente sur une de ses faces, des bouclettes (2a) coopérant avec les têtes champignons (1b1) de l'élément (1) (figure 9). Le tissu (2) est par exemple du type dit "Charmeuse" en étant fabriqué sur un métier tricot-chaîne rectiligne à trois barres, dont l'une exécute les boucles (2a) en utilisant soit un système de platine, soit un système de mailles jetées.

La face opposée à la face du tissu (2) qui présente les bouclettes (2a) peut être fixée par tout moyen connu contre l'intérieur de la housse (3). A noter que la contre-partie (2) peut éventuellement être exécutée sous forme d'un ruban.

On prévoit une réalisation économique selon laquelle l'élément (1), dans le cas d'un support en matière textile avec structure tissée, ou partie à têtes champignons (1b) est exécuté avec un nombre plus réduit de coups de trame que l'on écarte dans des conditions préétablies, de sorte que les tiges ou pointes présentant les têtes (1b) sont inclinées. On signale que, selon un mode de fabrication avantageux correspondant à un Brevet antérieur, ces tiges ou pointes résultent du sectionnement à chaud des fils qui sont tissés avec et entre deux rubans parallèles. Le sectionnement à chaud provoque la fusion des extrémités coupées et forme les têtes d'accrochage (figure 4).

Dans la réalisation des figures 10 à 14, afin d'obtenir une meilleure et plus forte adhérence de la face (1d) du support, opposée à la face(1a) qui présente les têtes et tiges (1b), on utilise un tissu (4) par exemple en ruban ou bande correspondant au support (1), comme illustré à la figure 11. Le tissu (4) peut ne recouvrir que partiellement la face (1a).

Le tissu (4) a une structure lâche, ajourée, et plus précisément dans l'exemple illustré, il s'agit d'un tissu à mailles exécuté avec un grand rendement et économiquement sur des métiers à mailles, du type Rachel par exemple. Les chaînettes (4a) sont reliées par des fils transversaux (4b), en constituant en quelque sorte des "échelles" avec de multiples ajours. La texture est lâche, et constitue une sorte de "grille".

Après avoir enduit d'une colle appropriée (5), de toute nature connue, la face (1d) du support, on applique le tissu (2) sur cette face en le rendant solidaire du support, comme illustré à la figure 13. La combinaison constitue un produit unitaire ou élément auto-agrippant nouveau.

Lors du moulage ou injection du matériau (P), qui est un matériau mousse alvéolé de préférence, constituant le corps ou carcasse d'un siège par exemple, le matériau pénètre aisément dans les ajours de la grille, c'est-à-dire entre les composants de la structure maillée. Il en résulte une adhérence et une solidarisation particulièrement robustes et résistantes, entre l'élément (1) et le matériau (P). L'assemblage répond aux plus hautes exigences.

On conçoit bien, dans le cadre de l'invention, l'intérêt et les avantages des dispositions ci-dessus.

Il est souligné que l'on peut utiliser tout tissu maillé, tricoté, grazé pour le tissu (4) qui peut être aussi de la gaze. Le tissu (4) peut aussi être exécuté partiellement avec des fils thermofusibles de façon à le fixer contre

la face (1d) par pression à chaud.

L'invention trouve une application particulièrement avantageuse pour la réalisation des sièges pour véhicules automobiles notamment, mais on n'exclue pas d'autres applications faisant appel à des corps ou carcasses moulés ou injectés en matière souple.

D'une manière connue, le ruban peut présenter du côté de sa face (1a) équipée des tiges d'accrochage (1b) et des parties adhésives (1c), une bande de protection détachable.

L'invention ne se limite aucunement à celui de ses modes d'application non plus qu'à ceux des modes de réalisation de ses diverses parties ayant plus spécialement été indiquées ; elle en embrasse au contraire toutes les variantes.

## REVENDICATIONS

-1- Elément auto-agrippant destiné à la réalisation des corps ou carcasses moulés ou injectés, en matière souple ou rigide, notamment pour les sièges de véhicules automobiles,ledit élément comprenant un support plat (1) souple, rigide ou semi-rigide, qui présente sur une de ses faces (1a) une multiplici-té de tiges ou pointes saillantes (1b) terminées chacune par une tête champignon ou renflement d'accrochage, lesdites têtes d'accrochage étant destinées à coopérer avec une contrepartie qui présente une multiplicité de boucles, en réalisant ainsi un accrochage ou assemblage séparable, ledit élément étant caractérisé en ce qu'il est exécuté. et dimensionné de façon à présenter, du côté de la face (1a) avec la multiplicité des tiges d'accrochage (1b), de part et d'autre ou tout autour desdites tiges, des parties auto-adhésives (1c) destinées à maintenir l'élément dans le moule du corps ou carcasse pendant la coulée ou l'injection de la matière en protégeant les tiges d'accrochage de la matière moulée ou injectée, ledit élément demeurant solidaire du corps ou carcasse.

-2- Elément selon la revendication 1, caractérisé en ce que le support plat (1) est souple et en matière textile avec une structure tissée de sorte que la face (1d), opposée à la face (1a) présentant les têtes d'accrochage (1b) et les parties auto-adhésives (1c) présente une pluralité de micro-aspérités favorisant une étroite adhérence avec la matière moulée ou injectée.

-3- Elément selon la revendication 1, caractérisé en ce que le support plat (1) présente sur sa face (1d) opposée à la face (1a), des aspérités ou points d'ancrage ou d'adhérence.

-4- Elément selon la revendication 1, caractérisé en ce que la face (1d) présente, en totalité ou en partie, des fils pelu-cheux (1e) incorporés au tissage pour former des saillies, afin d'améliorer l'adhérence du support textile (1) avec la matière moulée ou injectée.

-5- Elément selon la revendication 4, caractérisé en ce que les fils pelucheux (1e) sont tissés pour former à intervalles réguliers ou non, des boucles ouvertes en saillies (1e1).

-6- Elément selon la revendication 4, caractérisé en ce que les fils pelucheux (1e) sont tissés en trame et/ou en chaîne.

-7- Elément suivant la revendication 1, caractérisé en ce que la face (1d) du support plat (1) opposée à la face (1a) qui présente les têtes et tiges d'accrochage (1b) est recouverte en totalité ou en partie, d'un tissu (4) à structure lâche, ajourée, qui est fixé contre ladite face (1d), en constituant une grille d'ancrage très robuste et résistant pour la matière moulée ou injectée.

-8- Elément suivant la revendication 7, caractérisé en ce que le tissu (4) est un ruban ou bande correspondant au support (1) constituant ledit élément.

-9- Elément suivant la revendication 7, caractérisé en ce que le tissu à structure lâche, ajouré, est constitué par un tissu à mailles.

-10- Elément suivant la revendication 7, caractérisé en ce que l'on utilise toute colle appropriée (5), pour fixer le tissu (4) à structure lâche, ajouré, contre la face (1d) de l'élément.

-11- Elément suivant la revendication 7, caractérisé en ce que le tissu à structure lâche, ajouré, peut être tout tissu maillé, tricoté, grazé, et aussi de la gaze.

-12- Elément suivant la revendication 1, caractérisé en ce que le tissu à structure lâche, ajouré, est exécuté partiellement avec des fils thermofusibles de façon à le fixer contre la face (1d) du support ou élément, par pression à chaud.

-13- Elément selon la revendication 1, caractérisé en ce que les parties auto-adhésives (1c) sont exécutées sous forme de bandes le long des lisières du support (1).

-14- Elément selon la revendication 1, caractérisé en ce que les parties auto-adhésives (1c) sont exécutées sous forme de bandes longitudinales et/ou transversales de part et d'autre des ensembles à boucles d'accrochage (1b).

-15- Corps ou carcasse mettant en oeuvre l'élément selon l'une quelconque des revendications 1 à 14, dans le cas d'une application à des sièges pour véhicules automobiles notamment, caractérisé en ce que ledit corps ou carcasse, en matière souple, présente directement, après démoulage, plusieurs éléments (1) rendus solidaires dudit corps ou carcasse avec un haut degré d'adhérence, les faces (1a) desdits éléments (1), de par leur tête d'accrochage (1b), permettent de recevoir un habillage extérieur (3) qui présente intérieurement, en totalité ou en partie, un ou des éléments en contrepartie, notamment du tissu (2) à boucles (2a) dans lesquelles sont susceptibles de s'accrocher les têtes champignons pour assurer l'assemblage.

FIG.1

FIG.8

FIG.9

FIG. 2

FIG.4

FIG.3

FIG.5

FIG.6

FIG.7

3/3

0138724

FIG.10

FIG.11

FIG.12

FIG.13

FIG.14